# EUROPÄISCHE PATENTSCHRIFT

(11) **EP 1 102 924 B1**
(45) Veröffentlichungstag und Bekanntmachung des Hinweises auf die Patenterteilung: **13.11.2002**
(21) Anmeldenummer: 99965347.0
(22) Anmeldetag: 14.05.1999
(51) Int. Cl.: F02B 23/10, F02F 1/42

(54) **VIERTAKT-BRENNKRAFTMASCHINE MIT DIREKTEINSPRITZUNG**
FOUR-STROKE INTERNAL COMBUSTION ENGINE WITH DIRECT INJECTION
MOTEUR A COMBUSTION INTERNE A QUATRE TEMPS, A INJECTION DIRECTE

(30) Priorität: 06.08.1998 DE 19835563
(43) Veröffentlichungstag der Anmeldung: 30.05.2001
(73) Patentinhaber: Volkswagen Aktiengesellschaft, 38436 Wolfsburg (DE)
(72) Erfinder: SPIEGEL, Leo, D-38518 Gifhorn (DE); FLADUNG, Oliver, D-38118 Braunschweig (DE); LINDLAU, Michael, D-38104 Braunschweig (DE); LIPPERT, Eduard, D-38547 Calberlah (DE); STIEBELS, Bernd, D-38528 Adenbüttel (DE); THEOBALD, Jörg, D-38165 Lehre (DE)
(86) Internationale Anmeldenummer: EP9903323
(87) Internationale Veröffentlichungsnummer: WO00008318

(56) Entgegenhaltungen:
- EP-A- 0 694 682
- EP-A- 0 778 402
- DE-A- 19 713 030
- DE-A- 19 741 380
- FR-A- 2 772 074

## Beschreibung

Die Erfindung betrifft eine Viertakt-Brennkraftmaschine mit Fremdzündung, direkter Einspritzung eines Kraftstoffes mit einer Einspritzdüse in einen Brennraum, wenigstens einem Einlaßkanal mit Einlaßventil und wenigstens einem Auslaßkanal mit Auslaßventil, wobei Einlaßventil und Auslaßventil an gegenüberliegenden Seiten des Brennraumes angeordnet sind und wobei die Einspritzdüse einlaßventilseitig angeordnet ist, und mit wenigstens einer in einem Kolbenboden einlaßventilseitig ausgebildeten Mulde, wobei ein Kolben eine sich in Bewegungsrichtung desselben erstreckende Mittellängsachse aufweist, wobei die Mulde einlaßventilseitig angeordnet und bezüglich Einlaßventil und Einspritzdüse derart mit wenigstens einem den höchsten Punkt des Kolbenbodens bildenden Randabschnitt der Umfangskontur ausgebildet ist, daß eine von dem in entsprechender Weise ausgebildeten Einlaßkanal über das Einlaßventil in den Brennraum eintretende Luftströmung und ein von der Einspritzdüse in den Brennraum eintretender Einspritzstrahl an gegenüberliegenden Seiten in die Mulde eintreten, wobei ferner auf dem Kolbenboden eine die Mulde quer zur Einspritzrichtung in eine Kraftstoffmulde und eine Luftmulde teilende Erhebung derart ausgebildet ist, daß der Einspritzstrahl in die Kraftstoffmulde an einer der Erhebung gegenüberliegenden Seite und die Luftströmung in entgegengesetzter Richtung bezüglich des Einspritzstrahles in die Luftmulde an einer der Erhebung gegenüberliegenden Seite eintritt, gemäß dem Oberbegriff des Anspruchs 1.

Zum Erzeugen eines geeigneten Gemisches aus Luft und Kraftstoff in einem Brennraum einer Viertakt-Brennkraftmaschine mit direkter Einspritzung ist es bekannt, spezielle Tumble- oder Drallströmungen erzeugende Einlaßkanäle vorzusehen und Kolbenböden mit entsprechenden Mulden und Leitrippen auszubilden. Bei einer Drallströmung rotiert eine Zylinderladung beispielsweise aufgrund der Einlaßkanalgebung um die Zylinderachse, während bei einer Tumbleströmung eine Rotation um eine zu einer der Kurbelwelle parallelen Achse zu beobachten ist.

So beschreiben die DE 197 13 030 A1, die DE 197 13 029 A1 und die DE 197 13 028 A1 jeweils eine Viertakt-Brennkraftmaschine mit Fremdzündung und direkter Einspritzung, wobei eine Kolbenoberfläche eines jeden Kolbens eines Zylinders jeweils eine H-förmige, T-förmige oder U-förmige Leitrippenanordnung aufweist.

Aus der EP 0 639 703 A1 und der EP 0 694 682 A1 ist jeweils eine weitere Ausführungsform einer Brennkraftmaschine mit direkter Einspritzung bekannt, bei welcher durch die Ausformung der Einlaßkanäle eine Drallströmung im Zylinderraum erzeugt wird. Die Kolbenoberfläche weist hier eine ausgeprägte Mulde mit umgebender Quetschfläche auf, wobei die Mulde derart exzentrisch angeordnet ist, daß die zentral im Brennraum befindliche Zündkerze und das radial angeordnete Einspritzventil sich jeweils am Muldenrand befindet Der Kraftstoff wird gezielt gegen den zu diesem Zweck ausgeformten Muldenrand gespritzt. Die Kolbenoberfläche hat hier also die Aufgabe, den Kraftstoffstrahl in erster Linie zu zerstäuben. Der Drallströmung kommt die Aufgabe zu, den zerstäubt von der Mulde abprallenden Kraftstoff zur Zündkerze zu transportieren.

Aus der EP 0 558 072 A1 ist eine weitere Ausführungsform eines Motors bekannt, in welchem durch die Form und Anordnung der Einlaßkanäle eine umgekehrte Tumble-Bewegung der Brennraumströmung erzeugt wird, die durch eine schanzenartige Ausformung der Kolbenoberfläche verstärkt wird. Diese Kolbenoberfläche dient gleichzeitig der Umlenkung des Einspritzstrahls zur Zündkerze, die in der Zylindermitte angeordnet ist. Einspritzstrahl und Brennraumströmung streichen so in gleicher Richtung über die Kolbenoberfläche. Der Einspritzstrahl bzw. die daraus nach der Umlenkung am Kolben entstehende Gemischwolke kann sich jedoch nach dem Auftreffen auf die Zylinderkopfwand nahe der Zündkerze in alle Richtungen nahezu ungehindert ausbreiten. Ein Bemühen um eine möglichst starke Konzentration der Gemischwolke nach der Umlenkung am Kolben ist daher nicht erkennbar. Femer erzeugt die auf der Kolbenoberfläche ausgebildete Schanze unter den Auslaßventilen eine Quetschfläche. Diese erzeugt zwar während der Kompression des Motors kurz vor dem oberen Totpunkt eine gewünschte zusätzliche Strömungsbewegung. Diese kehrt sich jedoch nach Durchlaufen des Totpunktes um, was zu einem Auseinanderreißen der während der Kompression aufgebauten Gemischkonzentration führt.

Alle diese Anordnungen haben ferner den Nachteil, daß nicht über einen gesamten Kennfeldbereich einer Viertakt-Brennkraftmaschine eine optimale Gemischbildung erfolgt.

Der vorliegenden Erfindung liegt die Aufgabe zugrunde, eine Brennkraftmaschine der o.g. Art mit verbesserten Kolben zur Verfügung zu stellen, wobei die obengenannten Nachteile überwunden werden.

Diese Aufgabe wird erfindungsgemäß durch eine Viertakt-Brennkraftmaschine der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß in der Schnittebene die Kraftstoffmulde eine Tiefe t_{Ka} zwischen der Erhebung und einem unteren Kraftstoffmuldenrand 4 mm bis 12 mm aufweist, daß in der Schnittebene die Luftmulde eine Tiefe t_{L} bezüglich einem der Erhebung gegenüberliegenden Luftmuldenrand von 2 mm bis 10 mm aufweist, daß in der Schnittebene eine Tangente einer Kraftstoffmuldenwandung an einem der Erhebung gegenüberliegenden Kraftstoffmuldenrand mit der Mittellängsachse einen Winkel γ_{K1} von 40 Grad bis 62 Grad einschließt, und daß in der Schnittebene eine Tangente einer Luftmuldenwandung an einem der Erhebung gegenüberliegenden Kraftstoffmuldenrand mit der Mittellängsachse einen Winkel γ_{L1} von 30 Grad bis 62 Grad einschließt.

Durch die Kombination dieser besonderen Geometriemerkmal ergibt sich in überraschender Weise eine optimale Beherrschung des Schichtprofils mittels exakter Abstimmung der räumlichen Anordnung von Injektor bzw. Einspritzdüse und Zündort bzw. Zündkerze in weiten Kennfeldbereichen. Eine Empfindlichkeit der Gemischbildung bezüglich Serienstreuungen und gebrauchsbedingte Änderungen des Injektors ist vermindert. Der Brennverlauf zeigt einen kontinuierlicheren Energieumsatz bei gleichzeitiger Berücksichtigung aller Erfordernisse eines hervorragenden Vollastpotentials. Ferner ist die Erfindung einfach in bereits vorhandene Mehrventil-Zylinderkopfkonzepte integrierbar.

In jeweiligen bevorzugten Ausführungsformen überragt die Erhebung den Kolbenboden, beträgt die Tiefe t_{Ka} 11,1 mm, 11,41 mm, 11,47 mm oder 4,6 mm, beträgt die Tiefe t_{L} 8 mm, 3,07 mm, 2,5 mm oder 8,5 mm, beträgt der Winkel γ_{L1} 50,6 Grad, 54,2 Grad, 60,4 Grad oder 34,8 Grad, beträgt der Winkel γ_{K1} 56,4 Grad, 48,9 Grad, 49,8 Grad oder 60,4 Grad, weist in der Schnittebene der der Erhebung gegenüberliegende Luftmuldenrand einen senkrechten Abstand x_{L} zur Mittellängsachse von 33 mm bis 36 mm, insbesondere 35,76 mm, 34,6 mm, 35,75 mm oder 33,27 mm auf, weist in der Schnittebene die Erhebung einen senkrechten Abstand x_{E} zur Mittellängsachse von 0 mm bis 7 mm, insbesondere 0,5 mm, 6,85 mm, 2 mm, 4,14 mm oder 2 mm auf, schließt in der Schnittebene eine Tangente einer Kraftstoffmuldenwandung an der Erhebung mit der Mittellängsachse einen Winkel γ_{K2} von 10 Grad bis 50 Grad, insbesondere 20,9 Grad, 12,5 Grad, 18,7 Grad oder 45,5 Grad ein und/oder schließt in der Schnittebene eine Tangente einer Luftmuldenwandung an der Erhebung mit der Mittellängsachse einen Winkel γ_{L2} von 0 Grad bis 80 Grad, insbesondere 23,2 Grad, 64,6 Grad, 77,3 Grad oder 47,7 Grad ein.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine bevorzugte Ausführungsform einer erfindungsgemäßen Viertakt-Brennkraftmaschine,
- Fig. 2: eine zweite bevorzugte Ausführungsform für eine Kolbengeometrie in prinzipieller Darstellung und
- Fig. 3 bis 6: spezielle Ausführungsbeispiele einer Kolbengeometrie gemäß Fig. 2 jeweils in perspektivischer Ansicht, in Aufsicht und in entsprechenden Schnittansichten gemäß der Linien in den jeweiligen Aufsichten.

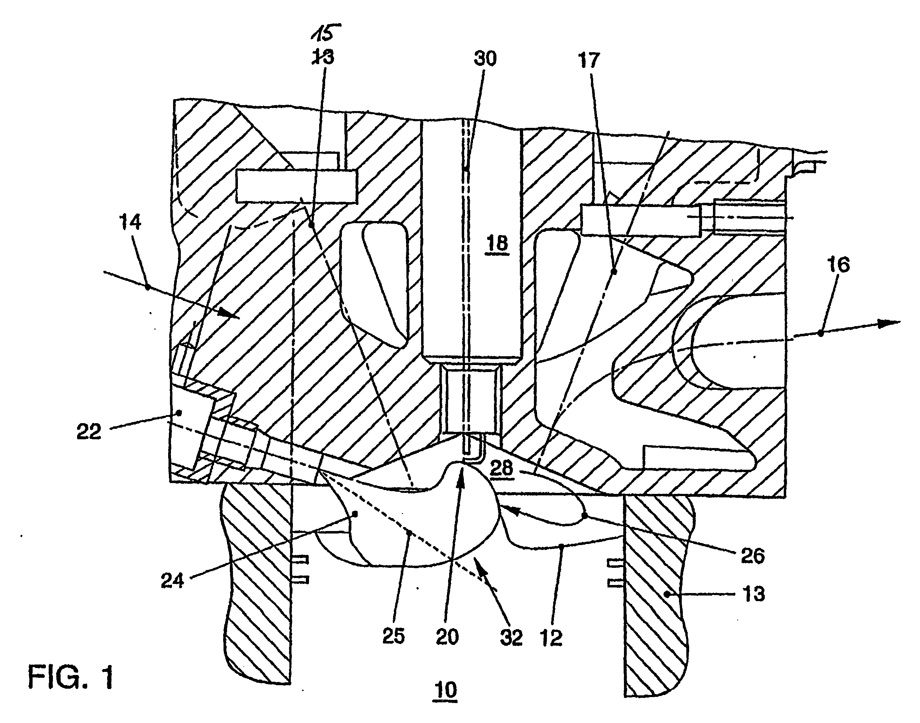

Die in Fig. 1 dargestellte bevorzugte Ausführungsform einer erfindungsgemäßen Viertakt-Brennkraftmaschine umfaßt einen Kolben 10 mit Kolbenboden 12, welcher in einem Zylinder 13 auf- und abbewegbar ist, einen Einlaßkanal 14 mit Einlaßventilachse 15, einen Auslaßkanal 16 mit Auslaßventilachse 17 sowie eine Zündkerze 18 mit Zündort 20. Mittels einer Einspritzdüse 22 ist Kraftstoff in einem Einspritzstrahl 24 in Richtung einer Einspritzachse 25 einspritzbar. Durch den Einlaßkanal 14 strömt Frischluft in einer Tumbleströmung 26 in einen Brennraum 28 ein.

Der Kolben definiert eine Mittellängsachse 30, welche mit einer Längsachse der Zündkerze 18 fluchtet oder nahe zu ihr liegt, wobei der Zündort 20 auf oder in unmittelbarer Nähe der Mittellängsachse 30 liegt. Der Kolbenboden 12 weist eine Mulde 32 auf, in die der Einspritzstrahl 24 gerichtet ist. Wie sich unmittelbar aus Fig. 1 ergibt, ist die Einspritzdüse 22 einlaßkanalseitig und unterhalb des Einlaßkanals 14 angeordnet. Es können dabei auch zwei oder mehr Einlaß- bzw. Auslaßkanäle 14, 16 vorgesehen sein. Diese sind dann beispielsweise mit getrennten Einlaßkanalabschaltungen ausgebildet. Die Mulde 32 sowie die Anordnung der Ein- und Auslaßkanäle 14, 16 wie auch der Einspritzdüse 22 ist dabei erfindungsgemäß derart gewählt, daß sich entweder eine Tumbleströmung alleine oder eine Tümbleströmung kombiniert mit einer Drallströmung ergibt. Die Anordnung bei mehreren Auslaßkanälen 16 ist vorzugsweise siamesisch.

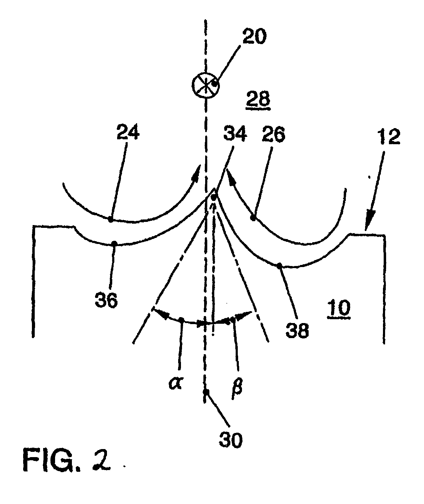

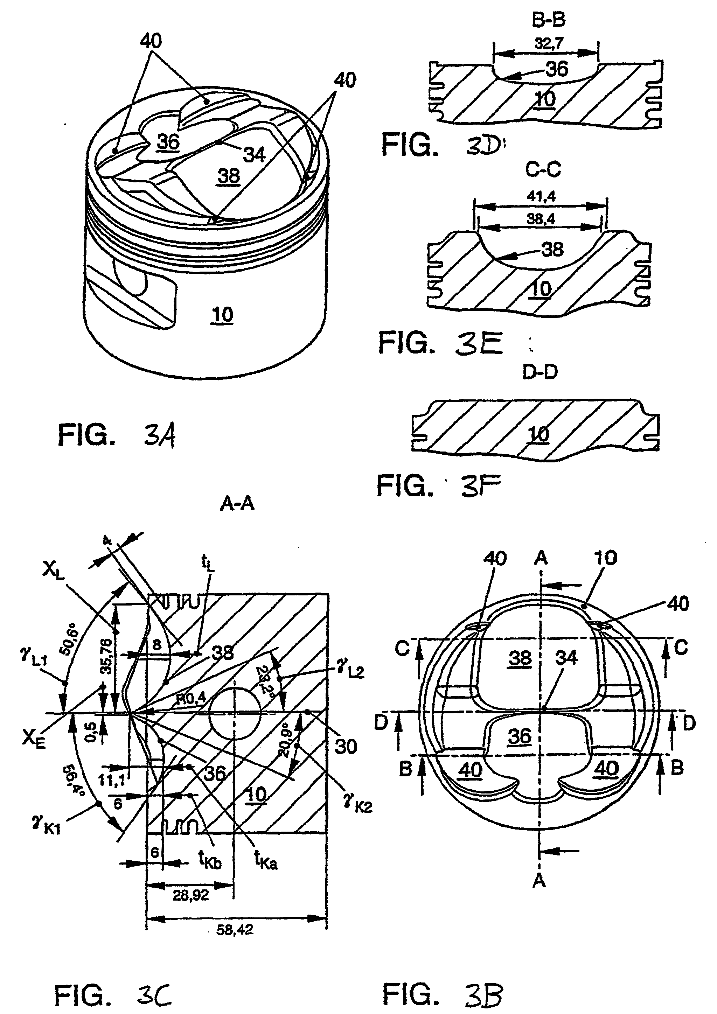

Fig. 2 veranschaulicht vorbestimmte Strömungsverhältnisse bei einem erfindungsgemäßen Kolben 10 mit einer Mulde, welche von einer Erhebung 34 in eine Kraftstoffmulde 36 und eine Luftmulde 38 geteilt ist. Einspritzstrahl 24 und Luft 26 treten von entgegengesetzten Richtungen in die Doppelmulde 36, 38 ein, werden von der Erhebung 34 abgelenkt und vermischen sich oberhalb dieser und bilden in entsprechender Weise ein zündfähiges Gemisch am Zündort 20. Die Geometrie der Mulden 36, 38 sowie der Erhebung 34 beeinflussen dabei ganz entscheidend die Gemischbildung, sowie die exakte Abstimmung der Erhebungsflankenwinkel α und β (Fig. 2) und die Lage des Einspritzwinkels des Kraftstoffes.

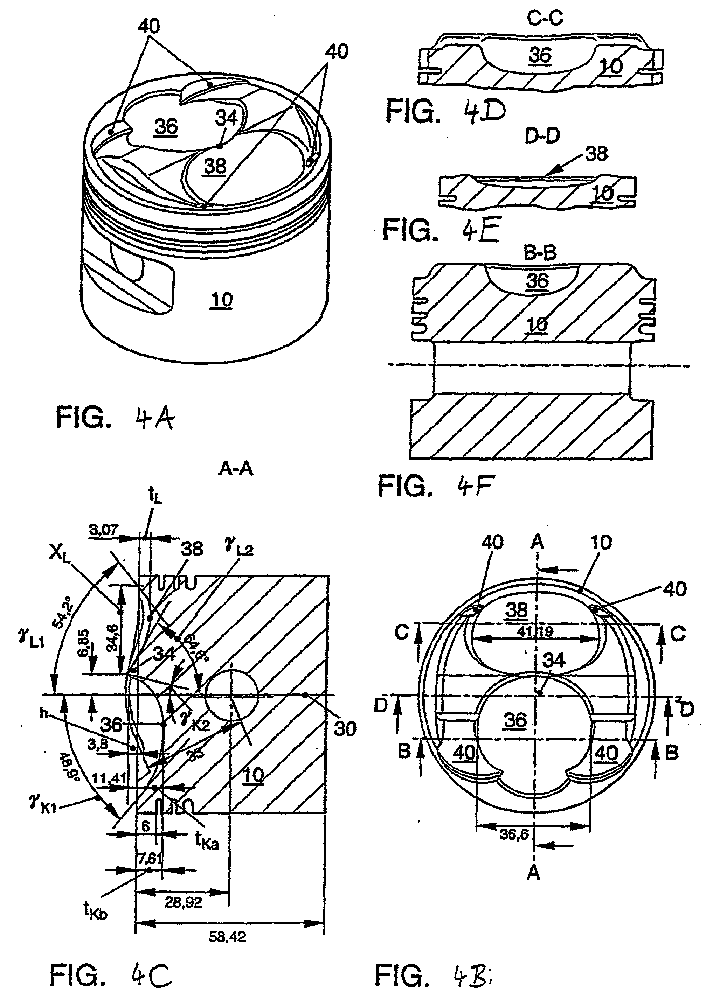

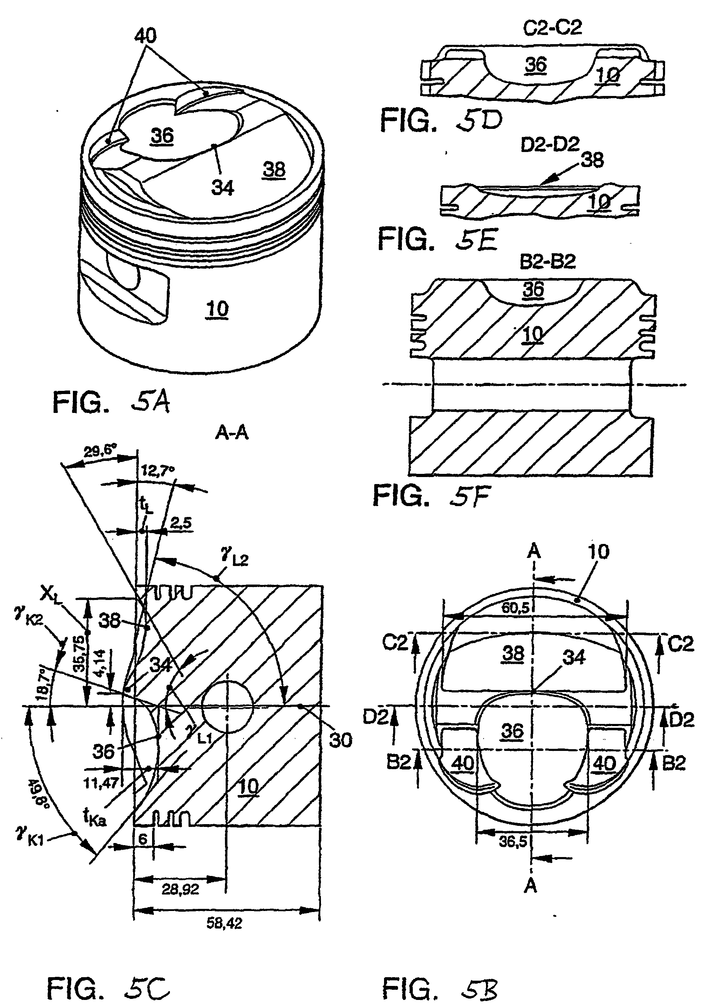

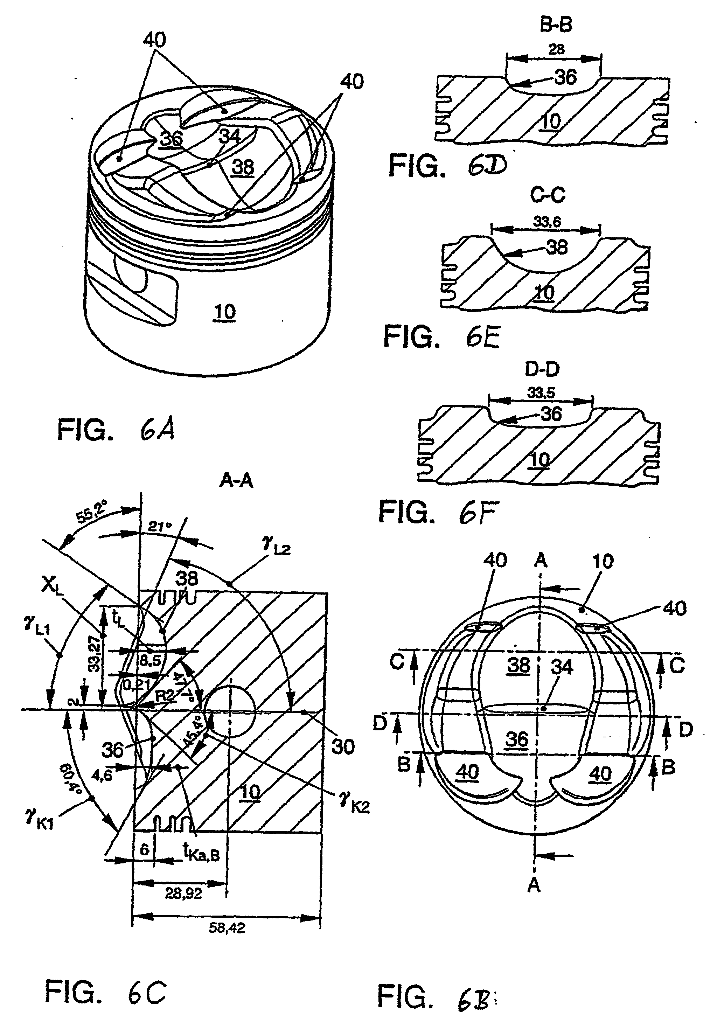

Bei den Ausführungsformen gemäß der Fig. 3 bis 6 ist, wie zuvor erläutert, auf dem Kolbenboden 12 eine die Mulde 32 in eine Kraftstoffmulde 36 und eine Luftmulde 38 unterteilende Erhebung 34 vorgesehen, wobei die Erhebung 34 den Kolbenboden 12 in einer bevorzugten Ausführungsform überragt. In einer Schnittebene gemäß der Fig.1 bzw. der jeweiligen Fig. 3C bis 6C weist die Kraftstoffmulde 36 eine größte Tiefe t_{Ka} (Fig. 3C) zwischen der Erhebung 34 und einem unteren Kraftstoffmuldenrand von ca. 4 bis 13 mm auf, insbesondere 11,1 mm (Fig. 3C), 11,41 mm (Fig. 4C), 11,47 mm (Fig. 5C) und 4,6 mm (Fig. 6C). Zwischen einer höchsten Stelle und dem unteren Luftmuldenrand weist ein Maß t_{Kb} Werte zwischen 4 und 8 mm auf, insbesondere 6 mm, 7,61 mm und 4,6 mm. Ferner weist die Luftmulde 38 eine Tiefe t_{L} (Fig. 3C) bezüglich einem der Erhebung 34 gegenüberliegenden Luftmuldenrand von 2 mm bis 10 mm, insbesondere 8 mm, 3,07 mm, 2,5 mm oder 8,5 mm auf. Der der Erhebung 34 gegenüberliegende Luftmuldenrand weist einen senkrechten Abstand x_{L} (Fig. 3C) zur Mittellängsachse 30 von 33 mm bis 36 mm, insbesondere 35,76 mm, 33,2 mm, 34,6 mm, 35,75 mm oder 33,27 mm auf. Die Erhebung 34 weist einen senkrechten Abstand x_{E} (Fig. 3C) zur Mittellängsachse 30 von 0 mm bis 7 mm, insbesondere 0,5 mm, 6,85 mm, 4,14 mm oder 2 mm auf. Eine Tangente einer Kraftstoffmuldenwandung schließt an einem der Erhebung 34 gegenüberliegenden Kraftstoffmuldenrand mit der Mittellängsachse 30 einen Winkel γ_{K1} (Fig. 3C) von 40 Grad bis 62 Grad, insbesondere 56,4 Grad, 48,9 Grad, 49,8 Grad, oder 60,4 Grad ein. Eine Tangente einer Kraftstoffmuldenwandung schließt an der Erhebung 34 mit der Mittellängsachse 30 einen Winkel γ_{K2} (Fig. 3C) von 8 Grad bis 50 Grad, insbesondere 20,9 Grad, 12,5 Grad, 18,7 Grad oder 45,5 Grad ein. Eine Tangente einer Luftmuldenwandung an der Erhebung 34 schließt mit der Mittellängsachse 30 einen Winkel γ_{L2} (Fig. 3C) von 0 Grad bis 80 Grad, insbesondere 23,2 Grad, 64,6 Grad, 77,3 Grad oder 47,7 Grad ein. Eine Tangente einer Luftmuldenwandung an einem der Erhebung 34 gegenüberliegenden Kraftstoffmuldenrand mit der Mittellängsachse 30 einen Winkel **γ**_{L1} (Fig. 3C) von 30 Grad bis 62 Grad, insbesondere 50,6 Grad, 54,2 Grad, 60,4 Grad oder 34,8 Grad ein.

## Patentansprüche

1. Viertakt-Brennkraftmaschine mit Fremdzündung, direkter Einspritzung eines Kraftstoffes mit einer Einspritzdüse (22) in einen Brennraum (28), wenigstens einem Einlaßkanal (14) mit Einlaßventil (15) und wenigstens einem Auslaßkanal (16) mit Auslaßventil (17), wobei Einlaßventil (15) und Auslaßventil (17) an gegenüberliegenden Seiten des Brennraumes (28) angeordnet sind und wobei die Einspritzdüse (22) einlaßventilseitig angeordnet ist, und mit wenigstens einer in einem Kolbenboden (12) einlaßventilseitig ausgebildeten Mulde (32;36,38), wobei ein Kolben (10) eine sich in Bewegungsrichtung desselben erstreckende Mittellängsachse (30) aufweist, wobei die Mulde (32;36,38) einlaßventilseitig angeordnet und bezüglich Einlaßventil (15) und Einspritzdüse (22) derart mit wenigstens einem den höchsten Punkt des Kolbenbodens (12) bildenden Randabschnitt der Umfangskontur ausgebildet ist, daß eine von dem in entsprechender Weise ausgebildeten Einlaßkanal (14) über das Einlaßventil (15) in den Brennraum (28) eintretende Luftströmung (26) und ein von der Einspritzdüse (22) In den Brennraum (28) eintretender Einspritzstrahl (24) an gegenüberliegenden Seiten in die Mulde (32;36,38) eintreten, wobei ferner auf dem Kolbenboden (12) eine die Mulde (32) quer zur Einspritzrichtung in eine Kraftstoffmulde (36) und eine Luftmulde (38) teilende Erhebung (34) derart ausgebildet ist, daß der Einspritzstrahl (24) in die Kraftstoffmulde (36) an einer der Erhebung (34) gegenüberliegenden Seite und die Luftströmung (26) in entgegengesetzter Richtung bezüglich des Einspritzstrahles (24) in die Luftmulde (38) an einer der Erhebung (34) gegenüberliegenden Seite eintritt, **dadurch gekennzeichnet, daß** in der Schnittebene
- die Kraftstoffmulde (36) eine Tiefe t_{Ka} zwischen der Erhebung (34) und einem unteren Kraftstoffmuldenrand von 4 mm bis 12 mm aufweist,
- die Luftmulde (38) eine Tiefe t_{L} bezüglich einem der Erhebung (34) gegenüberliegenden Luftmuldenrand von 2 mm bis 10 mm aufweist,
- eine Tangente einer Kraftstoffmuldenwandung an einem der Erhebung (34) gegenüberliegenden Kraftstoffmuldenrand mit der Mittellängsachse (30) einen Winkel γ_{K1} von 40 Grad bis 62 Grad einschließt, und
- eine Tangente einer Luftmuldenwandung an einem der Erhebung (34) gegenüberliegenden Kraftstoffmuldenrand mit der Mittellängsachse (30) einen Winkel γ_{L1} von 30 Grad bis 62 Grad einschließt.

2. Viertakt-Brennkraftmaschine nach Anspruch 1, **dadurch gekennzeichnet, daß** die Erhebung (34) den Kolbenboden (12) überragt

3. Viertakt-Brennkraftmaschine nach Anspruch 1 oder 2, **dadurch gekennzeichnet, daß** die Tiefe t_{Ka} 11,1 mm, 11,41 mm, 11,47 mm oder 4,6 mm beträgt.

4. Viertakt-Brennkraftmaschine nach wenigstens einem der vorhergehenden Ansprüche, **dadurch gekennzeichnet, daß** die Tiefe t_{L} 8 mm, 3,07 mm, 2,5 mm oder 8,5 mm beträgt.

5. Viertakt-Brennkraftmaschine nach wenigstens einem der vorhergehenden Ansprüche, **dadurch gekennzeichnet, daß** der Winkel γ_{L1} 50,6 Grad, 54,2 Grad, 60,4 Grad oder 34,8 Grad beträgt.

6. Viertakt-Brennkraftmaschine nach wenigstens einem der vorhergehenden Ansprüche, **dadurch gekennzeichnet, daß** der Winkel γ_{K1} 56,4 Grad, 48,9 Grad, 49,8 Grad oder 60,4 Grad beträgt.

7. Viertakt-Brennkraftmaschine nach wenigstens einem der vorhergehenden Ansprüche, **dadurch gekennzeichnet, daß** in der Schnittebene der der Erhebung (34) gegenüberliegende Luftmuldenrand einen senkrechten Abstand x_{L} zur Mittellängsachse (30) von 33 mm bis 36 mm, insbesondere 35,76 mm, 34,6 mm, 35,75 mm oder 33,27 mm aufweist.

8. Viertakt-Brennkraftmaschine nach wenigstens einem der vorhergehenden Ansprüche, **dadurch gekennzeichnet, daß** in der Schnittebene die Erhebung (34) einen senkrechten Abstand x_{E} zur Mittellängsachse (30) von 0 mm bis 7 mm, insbesondere 0,5 mm, 6,85 mm, 2 mm, 4,14 mm oder 2 mm aufweist.

9. Viertakt-Brennkraftmaschine nach wenigstens einem der vorhergehenden Ansprüche, **dadurch gekennzeichnet, daß** in der Schnittebene eine Tangente einer Kraftstoffmuldenwandung an der Erhebung (34) mit der Mittellängsachse (30) einen Winkel γ_{K2} von 10 Grad bis 50 Grad, insbesondere 20,9 Grad, 12,5 Grad, 18,7 Grad oder 45,5 Grad einschließt.

10. Viertakt-Brennkraftmaschine nach wenigstens einem der vorhergehenden Ansprüche, **dadurch gekennzeichnet, daß** in der Schnittebene eine Tangente einer Luftmuldenwandung an der Erhebung (34) mit der Mittellängsachse (30) einen Winkel γ_{L2} von 0 Grad bis 80 Grad, insbesondere 23,2 Grad, 64,6 Grad, 77,3 Grad oder 47,7 Grad einschließt.

## Claims

1. Four-stroke internal combustion engine with spark ignition and the direct injection of a fuel into a combustion space (28) by means of an injection nozzle (22), at least one inlet duct (14) with an inlet valve (15) and at least one outlet duct (16) with an outlet valve (17), the inlet valve (15) and outlet valve (17) being arranged on opposite sides of the combustion space (28), and the injection nozzle (22) being arranged on the inlet-valve side, and with at least one recess (32; 36, 38) formed in a piston head (12) on the inlet-valve side, a piston (10) having a longitudinal mid-axis (30) extending in the direction of movement of the latter, the recess (32; 36, 38) being arranged on the inlet-valve side and being designed with respect to the inlet valve (15) and the injection nozzle (22), with at least one edge portion of the circumferential contour, said edge portion forming the highest point of the piston head (12), in such a way that an air flow (26) entering the combustion space (28) via the inlet valve (15) from the correspondingly designed inlet duct (14) and an injection jet (24) entering the combustion space (28) from the injection nozzle (22) enter the recess (32; 36, 38) on opposite sides, and, furthermore, an elevation (34) which divides the recess (32) transversely to the injection direction into a fuel recess (36) and an air recess (38) being formed on the piston head (12) in such a way that the injection jet (24) enters the fuel recess (36) on a side located opposite the elevation (34) and the air flow (26) enters the air recess (38), in the opposite direction to the injection jet (24), on a side located opposite the elevation (34), **characterized in that**, in the sectional plane,
- the fuel recess (36) has a depth t_{Ka} between the elevation (34) and a lower fuel-recess edge of 4 mm to 12 mm,
- the air recess (38) has a depth t_{L} in relation to an air-recess edge located opposite the elevation (34) of 2 mm to 10 mm,
- a tangent of a fuel-recess wall to a fuel-recess edge located opposite the elevation (34) forms with the longitudinal mid-axis (30) an angle γ_{K1} of 40 degrees to 62 degrees, and
- a tangent of an air-recess wall to an air-recess edge located opposite the elevation (34) forms with the longitudinal mid-axis (30) an angle γ_{L1} of 30 degrees to 62 degrees.

2. Four-stroke internal combustion engine according to Claim 1, **characterized in that** the elevation (34) projects above the piston head (12).

3. Four-stroke internal combustion engine according to Claim 1 or 2, **characterized in that** the depth t_{Ka} is 11.1 mm, 11.41 mm, 11.47 mm or 4.6 mm.

4. Four-stroke internal combustion engine according to at least one of the preceding claims, **characterized in that** the depth t_{L} is 8 mm, 3.07 mm, 2.5 mm or 8.5 mm.

5. Four-stroke internal combustion engine according to at least one of the preceding claims, **characterized in that** the angle γ_{L1} is 50.6 degrees, 54.2 degrees, 60.4 degrees or 34.8 degrees.

6. Four-stroke internal combustion engine according to at least one of the preceding claims, **characterized in that** the angle γ_{K1} is 56.4 degrees, 48.9 degrees, 49.8 degrees or 60.4 degrees.

7. Four-sroke internal combustion engine according to at least one of the preceding claims, **characterized in that**, in the sectional plane, the air-recess edge located opposite the elevation (34) is at a vertical distance x_{L} from the longitudinal mid-axis (30) of 33 mm to 36 mm, in particular 35.76 mm, 34.6 mm, 35.75 mm or 33.27 mm.

8. Four-stroke internal combustion engine according to at least one of the preceding claims, **characterized in that**, in the sectional plane, the elevation (34) is at a vertical distance x_{E} from the longitudinal mid-axis (30) of 0 mm to 7 mm, in particular 0.5 mm, 6.85 mm, 2 mm, 4.14 mm or 2 mm.

9. Four-stroke internal combustion engine according to at least one of the preceding claims, **characterized in that**, in the sectional plane, a tangent of a fuel-recess wall at the elevation (34) forms with the longitudinal mid-axis (30) an angle γ_{K2} of 10 degrees to 50 degrees, in particular 20.9 degrees, 12.5 degrees, 18.7 degrees or 45.5 degrees.

10. Four-stroke internal combustion engine according to at least one of the preceding claims, **characterized in that**, in the sectional plane, a tangent of an air-recess wall at the elevation (34) forms with the longitudinal mid-axis (30) an angle γ_{L2} of 0 degrees to 80 degrees, in particular 23.2 degrees, 64.6 degrees, 77.3 degrees or 47.7 degrees.

## Revendications

1. Moteur à combustion interne à quatre temps, à allumage par étincelles et à injection directe d'un carburant avec un injecteur (22) dans une chambre de combustion (28), au moins un canal d'admission (14) avec une soupape d'admission (15) et au moins un canal d'échappement (16) avec une soupape d'échappement (17), dans lequel la soupape d'admission (15) et la soupape d'échappement (17) sont disposées sur des côtés opposés de la chambre de combustion (28) et dans lequel l'injecteur (22) est disposé du côté de la soupape d'admission, et avec au moins une coupole (32; 36, 38) formée du côté de la soupape d'admission dans un fond de piston (12), dans lequel un piston (10) présente un axe central longitudinal (30) s'étendant dans la direction du mouvement de celui-ci, dans lequel la coupole (32; 36; 38) est disposée du côté de la soupape d'admission et est formée, par rapport à la soupape d'admission (15) et à l'injecteur (22), avec au moins une partie du bord du contour extérieur formant le point le plus haut du fond de piston (12), de telle manière qu'un écoulement d'air (26) provenant du canal d'admission (14) formé de façon correspondante pénétrant dans la chambre de combustion (28) par l'intermédiaire de la soupape d'admission (15) et qu'un jet d'injection (24) pénétrant dans la chambre de combustion (28) en provenance de l'injecteur (22) pénètrent dans la coupole (32; 36, 38) sur des côtés opposés, dans lequel en outre une saillie (34) divisant la coupole (32), transversalement à la direction d'injection, en une coupole à carburant (36) et une coupole à air (38) est formée sur le fond de piston (12) de telle manière que le jet d'injection (24) pénètre dans la coupole à carburant (36) sur un côté opposé à la saillie (34) et que l'écoulement d'air (26) pénètre dans la coupole à air (38) sur un côté opposé à la saillie (34), dans le sens contraire au jet d'injection (24), **caractérisé en ce que**
- la coupole à carburant (36) présente une profondeur t_{Ka} de 4 mm à 12 mm entre la saillie (34) et un bord inférieur de la coupole à carburant,
- la coupole à air (38) présente une profondeur t_{L} de 2 mm à 10 mm par rapport à un bord de la coupole à air opposé à la saillie (34),
- une tangente à une paroi de la coupole à carburant sur un bord de la coupole à carburant opposé à la saillie (34) forme un angle γ_{K1} de 40 degrés à 62 degrés avec l'axe central longitudinal (30), et
- une tangente à une paroi de la coupole à air sur un bord de la coupole à carburant opposé à la saillie (34) forme un angle γ_{L1} de 30 degrés à 62 degrés avec l'axe central longitudinal (30).

2. Moteur à combustion interne à quatre temps suivant la revendication 1, **caractérisé en ce que** la saillie (34) dépasse le fond de piston (12).

3. Moteur à combustion interne à quatre temps suivant la revendication 1 ou 2, **caractérisé en ce que** la profondeur t_{Ka} vaut 11,1 mm, 11,41 mm, 11,47 mm ou 4,6 mm.

4. Moteur à combustion interne à quatre temps suivant au moins une des revendications précédentes, **caractérisé en ce que** la profondeur t_{L} vaut 8 mm, 3,07 mm, 2,5 mm ou 8,5 mm.

5. Moteur à combustion interne à quatre temps suivant au moins une des revendications précédentes, **caractérisé en ce que** l'angle γ_{L1} vaut 50,6 degrés, 54,2 degrés, 60,4 degrés ou 34,8 degrés.

6. Moteur à combustion interne à quatre temps suivant au moins une des revendications précédentes, **caractérisé en ce que** l'angle γ_{K1} vaut 56,4 degrés, 48,9 degrés, 49,8 degrés ou 60,4 degrés.

7. Moteur à combustion interne à quatre temps suivant au moins une des revendications précédentes, **caractérisé en ce que**, dans le plan de coupe, le bord de la coupole à air opposé à la saillie (34) présente une distance X_{L} perpendiculaire à l'axe central longitudinal (30) de 33 mm à 36 mm, en particulier de 35,76 mm, 34,6 mm, 35,75 mm ou 33,27 mm.

8. Moteur à combustion interne à quatre temps suivant au moins une des revendications précédentes, **caractérisé en ce que**, dans le plan de coupe, la saillie (34) présente une distance X_{E} perpendiculaire à l'axe central longitudinal (30) de 0 mm à 7 mm, en particulier de 0,5 mm, 6,85 mm, 2 mm, 4,14 mm ou 2 mm.

9. Moteur à combustion interne à quatre temps suivant au moins une des revendications précédentes, **caractérisé en ce que**, dans le plan de coupe, une tangente à une paroi de la coupole à carburant sur la saillie (34) forme avec l'axe central longitudinal (30) un angle γ_{K2} de 10 degrés à 50 degrés, en particulier de 20,9 degrés, 12,5 degrés, 18,7 degrés ou 45,5 degrés.

10. Moteur à combustion interne à quatre temps suivant au moins une des revendications précédentes, **caractérisé en ce que**, dans le plan de coupe, une tangente à une paroi de la coupole à air sur la saillie (34) forme avec l'axe central longitudinal (30) un angle γ_{L2} de 0 degrés à 80 degrés, en particulier de 23,2 degrés, 64,6 degrés, 77,3 degrés ou 47,7 degrés.
